# EUROPEAN PATENT SPECIFICATION

(11) **EP 1 358 221 B1**
(45) Date of publication and mention of the grant of the patent: **15.04.2009**
(21) Application number: 01271397.0
(22) Date of filing: 15.12.2001
(51) Int. Cl.: C08F 10/00, C08F 4/656, C08F 4/658, C08F 4/651

(54) **METHOD FOR PRODUCING ETHYLENE HOME-AND CO-POLYMER**
VERFAHREN ZUR HERSTELLUNG VON ETHYLENHOMOPOLYMEREN UND COPOLYMEREN
PROCÉDÉ PERMETTANT DE PRODUIRE DES HOMOPOLYMÈRES ET DES COPOLYMÈRES D'ETHYLÈNE

(30) Priority: 18.12.2000 KR 2000077601
(43) Date of publication of application: 05.11.2003
(73) Proprietor: Samsung Total Petrochemicals Co. Ltd., Daesan-up, Seosan-shi Chungcheongnam Province (KR)
(72) Inventor: KIM, Sang-Yull, 305-390 Daejon (KR); YANG, Chun-Byung, 305-390 Daejon (KR); PARK, Ji-Yong, 305-390 Daejon (KR); LEE, Weon, 305-390 Daejon (KR)
(74) Representative: Laufhütte, Dieter
(86) International application number: PCT/KR2001/002180
(87) International publication number: WO 2002/050131

(56) References cited:
- EP-A1- 0 849 291
- JP-A- 5 009 216
- US-A- 5 006 619
- US-A- 6 100 351

## Description

### Technical Field

The present invention relates to a method for producing homo- and co-polymers of ethylene. More particularly, the invention relates to a method for producing homo- and co-polymers of ethylene comprising the steps of : preparing a catalyst precursor by reacting phosphorus compounds, silane compounds and mixture of titanium compounds and silicon compounds in turn by using halogenated magnesium as support; preparing a catalyst by maturing the catalyst precursor by introducing organoaluminum compounds and reacting the catalyst precursor with titanium compounds; and producing homo- and co-polymers of ethylene by introducing saturated hydrocarbons containing halogen during the polymerization.

### Background of the Invention

The polymers polymerized with Ziegler-Natta type catalysts in a single reactor of slurry or gas phase commonly have narrow molecular weight distribution. Because of this molecular structure, processability of polymers is lowered and tensile strength and rigidity at molten state is limited, thereby resulting in the distortion and contraction of shape and Parrison deflection during processing. Moreover, these polymers are difficult to apply to the production of large scale pipe or large blow molding products which require high mechanical resistance in a molten state.

Altemore et al. in US Patent No. 3,899,477 discloses a catalyst which uses titanium halide, vanadium halide and organoaluminum compounds. This catalyst can be used to produce polymers having broad molecular weight distribution by treating the catalyst with alkylaluminum sesquiethoxide and trialkylaluminum before polymerization. This prior art, however, has disadvantages in that the catalyst production process is complicated and it is difficult to control the condition of polymerization process due to the differences in the reactivity of the hydrogen, monomers and co-monomers in titanium and vanadium. In addition, the method which treats the catalyst with organoaluminum after preparation of the catalyst usually degrades the activity and shape of catalysts and lowers the productivity.

There has been much research on the methods for producing polymers having broad molecular weight distribution and bidentate molecular structure by using two or more reactors. U. Zucchini and G. Ceccin has published a method of polymerization using Ziegler-Natta type catalysts in two reactors in Adv. in Polymer Science 51, p 101-153 (1983). However, the method has a disadvantage in that the process is complicated when applied to actual factory line, and lowers the operational stability and reduces productivity.

It has been very difficult to produce polymers with broad molecular weight distribution by using common Ziegler-Natta type catalysts while maintaining catalyst characteristics and high productivity. Consequently, a method for controlling the molecular weight distribution is needed in order to expand the use of ethylene polymer and to improve their processability and physical properties.

### Disclosure of the Invention

The object of the present invention is to provide a method for producing homo- and co-polymers of ethylene, which does not exploit complicated catalyst production process and uses polymerization process which is not difficult and which can produce homo- and co-polymers of ethylene with broad molecular weight distribution by inserting the process of maturing to organoaluminum in the common process of preparing magnesium supported catalyst of high activity and by adding saturated hydrocarbon containing halogen during polymerization.

The method for producing homo- and co-polymers of ethylene according to the present invention comprises carrying out homo- or co-polymerization of ethylene in the presence of (1) a solid titanium complex catalyst prepared by the steps of (a) preparing a magnesium solution by contacting halogenated magnesium compounds with alcohol, (b) reacting said magnesium solution with phosphorus compounds and silane compounds containing alkoxy group as electron donors, (c) compositing a catalyst precursor through recrystallization into solids by contacting the solution prepared in step (b) with solution of mixture of titanium compounds and silicone compounds, (d) maturing the catalyst precursor by adding organoaluminum compounds, and (e) preparing a solid titanium complex catalyst by reacting with titanium compounds; (2) organometallic compounds in Group II and III of the Periodic Table; and (3) a saturated hydrocarbon containing halogen, which is introduced during polymerization.

For producing catalysts of the present invention, the types of halogenated magnesium compounds used include but are not limited to: di-halogenated magnesiums such as magnesium chloride, magnesium iodide, magnesium fluoride, and magnesium bromide; alkymagnesium halides such as methylmagnesium halide, ethylmagnesium halide, propylmagnesium halide, butylmagnesium halide, isobutylmagnesium halide, hexylmagnesium halide, and amylmagnesium halide; alkoxymagnesium halides such as methoxymagnesium halide, ethoxymagensium halide, isopropoxymagnesium halide, butoxymagnesium halide, octoxymagnesium halide; and aryloxymagnesium halides such as phenoxymagnesium halide and methyl-phenoxymagnesium halide. Above magnesium compounds can be used in the mixture of two or more of said compounds or in the form of a complex compound with other metals. The magnesium solution used in the present invention can be produced as solution by using the aforementioned halogenated magnesium compounds in the presence a hydrocarbon solvent or in the absence thereof, by using alcohol solvent.

The hydrocarbon solvents used in the present invention include but are not limited to aliphatic hydrocarbons such as pentane, hexane, heptane, octane, decane, and kerosene; alicyclic hydrocarbons such as cyclopentane, methylcyclopentane, cyclohexane, and methylcyclohexane; and aromatic hydrocarbons such as benzene, toluene, xylene, ethylbenzene, cumene, and cymene.

When a halogenated magnesium compound is converted into a magnesium solution, alcohol is used in the presence of the aforementioned hydrocarbons or in the absence thereof. The types of alcohol include but are not limited to those containing 1 ∼ 20 carbon atoms, such as methanol, ethanol, propanol, butanol, pentanol, hexanol, octanol, decanol, dodecanol, octadecyl alcohol, benzyl alcohol, phenylethyl alcohol, isopropyl benzyl alcohol, and cumyl-alcohol, although alcohol containing 1∼12 carbon atoms is preferable. The total amount of alcohol is preferably 2.0∼10 mol per each mole of magnesium compounds, and the dissolving temperature, while depending on the types of alcohol, is about 0 - 150°C, and the dissolving time is about 15 minutes∼ 5 hours and preferably about 30 minutes - 4 hours.

The phosphorus compound used in the present invention is expressed by the following general formula:

PXₐR¹_{b}(OR²)_{c} or POX_{d}R³ₑ(OR⁴)_{f}.

where X is a halogen atom, and R¹, R², R³ or R⁴ is a hydrocarbon of an alkyl, alkenyl or aryl group, having 1∼20 carbon atoms, each of which can be same or different from one another, with a + b + c = 3, 0≤a≤3 , 0≤b≤3 , 0≤c≤3 , d + e + f = 3, 0≤d≤3, 0≤e≤3, and 0≤f≤3. The type of these includes phosphorus trichloride, phosphorus tribromide, diethylchlorophosphite, diphenylchlorophosphite, diethylbromophosphite, diphenylbromophosphite, dimethylchlorophosphite, phenylchlorophosphite, trimethylphosphite, triethylphosphite, tri-n-butylphosphite, trioctylphosphite, tridecylphosphite, triphenylphosphite, triethylphosphate, tri-n-butylphosphate, and triphenylphophate. Other phosphor compounds satisfying the aforementioned formula may be used. As for the amount used, 0.25 mole or below per 1 mole of magnesium compound, and more preferably 0.2 mole or below per 1 mole, is appropriate.

The silane compound having an alkoxy group, another electron donor, is represented as the general formula:

RₙSi(OR)₄₋ₙ

where R is a hydrocarbon group having 1∼12 carbon atoms, and n natural number of 1∼3. More specifically, the following compounds can be used: dimethyldimethoxysilane, dimethyldiethoxysilane, diphenyldimethoxysilane, methylphenylmethoxysilane, diphenylethoxysilane, ethyltrimethoxysilane, vinyltrimethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, and methyltriaryloxylsilane. As for the amount used, 0.05 - 3 moles per 1 mole of magnesium compound, or more preferably 0.1∼2 moles, is preferable.

The titanium compounds used in the present invention is expressed by the following general formula:

Ti(OR)ₐX₄₋ₐ

where R stands for a alkyl group with 1∼10 carbon atoms, X a halogen atom, and a is a natural number between 0 and 4. Examples of titanium compounds which satisfy the general formula of Ti(OR)ₐX₄₋ₐ include 4-halogenated titanium such as TiCl₄, TiBr₄, and TiI₄; 3-halogenated alkoxy-titanium such as Ti(OCH₃)Cl₃, Ti(OC₂H₅)Cl₃, Ti(OC₂H₅)Br₃, and Ti(O(i-C₄H₉))Br₃; 2-halogenated alkoxy-titanium such as Ti(O(i-C₄H₉)₂Cl₂ and Ti(OC₂H₅)₂Br₂; and tetra-alkoxy titanium such as Ti(OCH₃)₄, Ti(OC₂H₅)₄, and Ti(OC₄H₉)₄. A mixture of the above titanium compounds can also be used in the present invention. The preferable titanium compounds are those containing halogen, or more preferably titanium tetrachloride.

The silicon compounds used in the present invention is expressed by the follow general formula;

RₙSiCl₄₋ₙ

where R stands for hydrogen; or an alkyl, alkoxy, haloalkyl, or aryl group having 1∼10 carbons; or a halosilyl or halosilylalkyl group having 1∼8 carbons; and n is a natural number between 0 and 3. Examples of silicon compounds satisfying the above general formula include silicon tetrachloride; trichlorosilane such as methyltrichlorosilane, ethyltrichlorosilane, phenyltrichlorosilane; dichlorosilane such as dimethyldichlorosilane, diethyldichlorosilane, di-phenyldichlorosilane, and methylphenyldichlorosilane; monochlorosilane such as trimethylchlorosilane; and a mixture of these silicon compounds can also be used in the present invention. The preferable compound is silicon tetrachloride.
The appropriate amount of the mixture of a titanium compound and a silicon compound used during recrystallization of the magnesium compound solution is 0.1 ∼ 200 mol per 1 mole of magnesium compound and preferably 0.1 ∼ 100 mol, more preferably 0.2 - 80 mol. The appropriate mole ratio of a titanium compound to a silicon compound in the mixture is 0.05 - 0.95 and more preferably 0.1 - 0.8. The reaction of a magnesium compound with the mixture of a titanium compound and a silicon compound should preferably be carried out at a sufficiently low temperature to crystallize particles of the catalyst since the shape and the size of the resultant re-crystallized solid components vary a great deal according to the reaction conditions and affect the bulk density of polymer. It is preferable that the reaction should be carried out by contacting at -70 - 70°C, or more preferably at -50 - 50°C. After the contact-reaction, the temperature is slowly raised and reaction is carried out for the duration of 0.5 ∼ 5 hours at 50 - 150°C.

The organoaluminum used in maturing the catalyst precursor in the present invention is expressed by general formula:
RₐAlX_{b} ,where R stands for hydrogen or an alkyl, alkoxy, haloalkyl, aryl group having 1∼10 carbons, and X halogen group including chlorine, bromine, iodine or fluorine, a and b natural number with a + b=3, or RₐAl₂X_{b} where R stands for hydrogen or an alkyl, alkoxy, haloalkyl, aryl group having 1∼10 carbons, and X halogen group including chlorine, bromine, iodine or fluorine etc., a and b natural number with a + b=6. More specifically, for example, the organoaluminum includes triethylaluminum, triisobutylaluminum, trimethylaluminum, ethylaluminum dichloride, ethylalminum sesquishloride, dimethylaluminum hydride, diethylaluminum chloride and dimethylaluminum chloride. The amount of organoaluminum used is preferably 0.02 ∼ 1 mol per 1 mole of magnesium compounds and more preferably 0.1 ~ 0.5 mol. When organoaluminum is used more than the amount of the present invention, the catalyst activity can be drastically reduced or the shape of catalyst can be destroyed. In addition, the shape of the catalyst changes with reacting temperature, the reaction should by carry out at sufficiently low temperature. Preferably, the reaction should be carried out at -50°C ∼ 50°C or more preferably at -20°C ∼ 30°C. After the contact-reaction, the temperature is slowly raised and the reaction is carried out for 0.5 ∼5 hours at 40°C ∼ 50°C

After maturing catalyst precursor with organoaluminum, further reaction is carried out with titanium compound represented by general formula Ti(OR)ₐX₄₋ₐ, where R stands for a hydrocarbon group, X a halogen atom, and a is a natural number between 0 and 4. The most preferable compound is titanium tetrachloride and the amount is preferably 1∼20 mol per 1 mole of magnesium compounds and more preferably 1∼10 mol. Reaction is carried out for 0.5 ∼5 hours at 40°C ∼ 150°C

The catalyst produced according to the process of the present invention can be utilized for homo- and co-polymerization of ethylene. As a polymerization monomer, α-olefin such as propylene, 1-butene, 1-pentene, 4-methyl-1-pentene, or 1-hexene having three or more carbons can be used.

In the polymerization reaction for producing homo- and co-polymers of ethylene according to the present invention uses, as a main catalyst, a titanium catalyst prepared as above and, as a cocatalyst, organometallic compounds of Groups II or III of the Periodic Table.

The solid titanium catalyst component can be used as a component in the polymerization reaction after pre-polymerization with ethylene or α -olefin. The prepolymerization helps maintaining the morphology of catalysts by surrounding the catalyst particles with polymers. The prepolymerization is carried out in the presence of de-polarized aliphatic hydrocarbon solvent such as hexane, at a sufficiently low temperature, and under a low pressure of ethylene or α -olefin and in the presence of the above catalyst component and organoaluminum compound such as triethylaluminium. The prepolymerization is carried out so that the weight ratio of polymers to catalysts becomes 0.1:1∼20:1.

The organometallic compound used as a cocatalyst of the present invention can be represented by a general formula of MRₙ, ,wherein M stands for a metal component of Group II or IIIA in the Periodic Table such as magnesium, calcium, zinc, boron, aluminum or gallium, and R an alkyl group with 1∼20 carbons such as methyl, ethyl, butyl, hexyl, octyl or decyl group, and n the atomic valence of the metal component. Among these organometallic compounds, the trialkyl aluminiums such as triethylaluminium and triisobutylaluminium, having an alkyl group of 1 ∼ 6 carbons, or mixture of these are preferable. If needed, one or more of halogen or hydride groups such as ethylaluminium dichloride, diethylaluminium chloride, ethylaluminium sesquichloride, or diisobutylaluminium hydride can be used as an organic aluminium compound.

The polymerization process can be gas phase polymerization or bulk polymerization which is carried without organic solvent, the process can be liquid slurry polymerization which is carried with organic solvent. In the case of gas phase polymerization, the amount of the catalyst in the reaction system is, in terms of titanium atoms in catalyst, approximately 0.001 ~ 5 mmol per one liter of the polymerization reactor, and preferably 0.001 ~ 1.0 mmol, and more preferably 0.01 - 0.5 mmol. The concentration of the organometallic compound, as calculated by organometallic atom, is preferably 1 ~ 2,000 mol per 1 mole of titanium atoms in catalyst, and more preferably about 5 ~ 500 mol. In case of liquid phase slurry polymerization, depolarized organic solvents or alkane compounds such as hexane, n-heptane, octane, nonane or decane, and aromatic compounds are used. Among this, hexane is most preferable and must be purified before use so as not to affect catalyst activity. The concentration of solid titanium complex catalyst in the polymerization reacting system is preferably about 0.001 - 5 mmol, in terms of titanium atoms in catalyst, per one liter of the solvent, and more preferably about 0.001 ∼ 0.5 mmol.

It is essential to add saturated hydrocarbon containing halogen during polymerization to obtain polymers of broad molecular weight distribution. Saturated hydrocarbon such as ethylchloride, chloroform, tertiarybutylchloride, tetrachloromethane, ethylbromide, teriarybutyliodide, n-butylbromide, n-butyliodide and n-butylfluoride, or their mixtures, which contains one or more of halogen of nitrogen, bromine, fluorine and iodine, and has 1∼10 carbons. Among these ethylchloride is most preferable. When saturated hydrocarbon containing halogen is injected with the mole ratio of 0.5∼20 mol in terms of titanium atoms in catalyst and more preferably 2∼10 mol, best result can be obtained in catalyst activity and molecular weight distribution. In addition, by carrying out polymerization without saturated hydrocarbon containing halogen, polymers which have narrow molecular weight distribution and reduced ratio of polymers of relatively high molecular weight can be obtained.

The appropriate temperature of polymerization is generally about 20 - 200°C, and more preferably about 20 - 95°C. The appropriate pressure of monomers is between 1 and 100 atm, and more preferably between 2 and 50 atm.

The molecular weight of polymers can be controlled by adjusting the amount of hydrogen injected, which is well known in the art. The molecular weight of the polymers is represented as melt index (ASTM D 1238), which is generally known in the art, and the value of the melt index generally becomes larger as the molecular weight decreases. The molecular weight distribution of polymers is measured with gel permeation chromatography (GPC), which is commonly used in the art.

### Best Mode for Carrying out the Invention

The present invention will now be described with reference to the examples and comparative examples. These examples, however, are for the purpose of illustration only, and not intended to limit the invention.

### Example 1

A solid titanium complex catalyst component is produced by following steps.

### (a) Preparation of a magnesium compound solution

Into a 1.0L reactor of nitrogen atmosphere equipped with a mechanical stirrer, 9.5 g of MgCl₂ and 500 ml of decane are placed and after stirring at 500 rpm, 72 ml of 2-ethyl hexanol is added and reacted for 3 hours at temperature 120°C. The homogenous solution obtained is cooled to room temperature.

### (b) Contacting the magnesium solution with phosphorus compound and alkoxy silane compound

To the magnesium compound solution cooled to room temperature, 7.4 ml of triethylphosphite and 15.0 ml of silicon tetraethoxide are added, and then reacted for an hour.

### (c) Contacting with solution of mixture of titanium compounds and silicone compounds

To the solution prepared in step (b) adjusted to room temperature, a solution of mixture of 90 ml of titanium tetrachloride and 90 ml of silicon tetrachloride is dripped for 2 hours. After completing the dripping step, the temperature of the reactor is raised to 80°C and maintained at that temperature for an hour. After stirring, the supernatant of the solution is removed, and to the remaining solid layer, 300 ml of decane and 100 ml of titanium tetrachloride is added continuously. Then, the temperature is raised to 100°C and maintained thereat for two hours. After the reaction, the temperature is cooled to room temperature and is washed by injecting 400ml of heptane.

### (d) Reacting with organoaluminum.

60ml of 1 mole ethylaluminumdichloride solution is injected to the slurry prepared in step (c) at 0°C. After injection, the temperature of reactor is raised to 60°C and maintained thereat for two hours. Then the temperature is cooled to room temperature, and is washed by injecting 400ml of heptane.

### (e) Reacting with titanium compound

To the slurry prepared at step (d) 150ml of heptane and 150ml of titanium tetrachloride is injected in order. Then the temperature of the reactor is raised for two hours to 95°C, and maintained thereat for 4 hours and then cooled to room temperature. After stopping the stirrer, it is washed by injecting 400ml of heptane until remaining free titaniumtetrachloride which is not reacted is removed. The titanium content of the prepared solid catalyst is 8.3%.

### Polymerization

A 2L high-pressure reactor is dried in an oven and assembled while hot. In order to make the inside of the reactor nitrogen atmosphere, nitrogen and vacuum are alternatively manipulated three times in the reactor. Then 1,000 ml of dry n-hexane is injected to the reactor and 0.09 mmol of triisobuthylaluminium and 0.09 mmol of ethylchloride is injected in order and the solid catalysts of 0.03 mol in terms of titanium atom and1000 ml of hydrogen are added thereto. The temperature of the reactor is raised to 80°C while stirring at 700 rpm with a stirrer and the pressure of ethylene is adjusted to 551 kPa (80psi), and the polymerization is carried out for an hour. After the polymerization, the temperature of the reactor was lowered to mom temperature, and an excessive amount of ethanol solution is added to terminate the reaction. The polymer produced is collected segregatedly using filters and is dried in a vacuum oven at 50°C for at least six hours.
The polymerization activity (kg of polyethylene divided by mmol Ti) is calculated as the weight (g) ratio of the polymers produced per catalysts used (mmol Ti). The results of polymerization are shown in Table 1, together with the melt index (g/10 minutes), and the molecular weight distribution (Mw/Mn).

### Example 2

A solid titanium complex catalyst component is produced by the same steps of example 1 except that 120ml of 1 mole ethylaluminum chloride is injected in step (d). The titanium content of the produced catalyst is 13.4%. Polymerization is carried out in the same way as example 1, and the results are shown in Table 1.

### Example 3

A solid titanium complex catalyst component is produced by the same steps of example 1 except that 120ml of 1 mole diethylaluminum chloride is injected in step (d). The titanium content of the produced catalyst is 12.1%. Polymerization is carried out in the same way as example 1, and the results are shown in Table 1.

### Example 4

A solid titanium complex catalyst component is produced by the same steps of example 1 except that 120ml of 1 mole ethylaluminum sesquichloride is injected in step (d). The titanium content of the produced catalyst is 14.8%. Polymerization is carried out in the same way as example 1, and the results are shown in Table 1.

### Example 5

Polymerization is carried out in the same way as example 1 except that the amount of ethylchloride is changed to 0.27mmol and the results are shown in Table 1.

### Example 6

Polymerization is carried out in the same way as example 1 except that 0.09mmol of chloroform is used instead of ethylchloride and the results are shown in Table 1.

### Example 7

Polymerization is carried out in the same way as example 1 except that 0.09mmol of tertiarybuthylchloride is used instead of ethylchloride and the results are shown in Table 1.

### Example 8

Polymerization is carried out in the same way as example 1 except that 0.09mmol of dichloroethanol is used instead of ethylchloride and the results are shown in Table 1.

### Example 9

Polymerization is carried out in the same way as example 1 except that 0.09mmol of dichloromethanol is used instead of ethylchloride and the results are shown in Table 1.

### Example 10

Polymerization is carried out in the same way as example 1 except that 0.09mmol of penylchloride is used instead of ethylchloride and the results are shown in Table 1.

### Comparative Example 1

A solid titanium complex catalyst component is produced by the same steps of example 1 except that the step (d) of reacting with organoaluminum is omitted. The titanium content of the produced catalyst is 5.0%. Polymerization is carried out in the same way as example 1 except that ethylchloride is not injected, and the results are shown in Table 1.

### Comparative Example 2

A solid titanium complex catalyst component is produced by the same steps of example 1 except that the step (d) of reacting with organoaluminum is omitted. The titanium content of the produced catalyst is 5.0%. Polymerization is carried out in the same way as example 1 and the results are shown in Table 1.

### Comparative Example 3

The catalyst prepared in Example 1 is used in the polymerization, and the polymerization is carried out in the same way as example 1 except that ethylchloride is not injected and the results are shown in Table 1.

**Table 1**

| Example | Organoaluminum | | Alkane halide | | Activity | MI | Mw/Mn |
|---|---|---|---|---|---|---|---|
| | Type | concentration (1M,ml) | Type | concentrateon (mmol) | (kg PF/ g of catalyst) | g/10min | |
| 1 | EADC | 60 | EC | 0.09 | 4.90 | 2.35 | 8.8 |
| 2 | EADC | 120 | EC | 0.09 | 4.30 | 2.01 | 9.7 |
| 3 | DEAC | 120 | EC | 0.09 | 4.88 | 2.37 | 9.1 |
| 4 | EASC | 120 | EC | 0.09 | 4.76 | 2.93 | 9.4 |
| 5 | EADC | 60 | EC | 0.27 | 4.61 | 0.20 | 9.0 |
| 6 | EADC | 60 | CHCl₃ | 0.09 | 4.21 | 2.07 | 8.7 |
| 7 | EADC | 60 | t-BuCl | 0.09 | 4.09 | 1.87 | 8.8 |
| 8 | EADC | 60 | DCE | 0.09 | 4.19 | 2.28 | 8.2 |
| 9 | EADC | 60 | DCM | 0.09 | 4.24 | 2.18 | 8.4 |
| 10 | EADC | 60 | PC | 0.09 | 4.06 | 2.11 | 8.1 |
| CE 1 | - | - | - | - | 4.01 | 3.32 | 6.8 |
| CE 2 | - | - | EC | 0.09 | 4.23 | 3.12 | 7.1 |
| CE 3 | EADC | 60 | - | - | 3.91 | 2.87 | 7.9 |

| | | | | | | | |
|---|---|---|---|---|---|---|---|
| * Types of Organoaluminum EADC: ethylaluminumdichloride, DEAC: diethlyaluminumdichloride, EASC: ethylaluminumsesquichloride; *Types of Alkane halide EC: ethylchloride, CHCl₃: chloroform, t-BuCl: tertiarybutylchloride, DCE: dichloroethane, DCM: dichloromethane, PC: Penylchloride * CE: comparative example. | | | | | | | |

As shown above, by way of the method for producing homo- and co-polymers of ethylene according to the present invention, it is possible to obtain homo- and co-polymers of ethylene, which have broad molecular weight distribution.

## Claims

1. A method for producing homo- and co-polymers of ethylene, which is carried out in the presence of:
(1) a solid titanium complex catalyst prepared by the steps of
(a) preparing a magnesium solution by contacting halogenated magnesium compounds with alcohol,
(b) reacting said magnesium solution with phosphorus compounds and silane compounds containing alkoxy group as electron donors,
(c) compositing a catalyst precursor through recrystallization into solids by contacting the solution prepared in step (b) with solution of mixture of titanium compounds and silicone compounds,
(d) maturing the catalyst precursor by adding organoaluminum compounds, and
(e) preparing a solid titanium complex catalyst by reacting with titanium compounds;
(2) organometallic compounds in Group II or III of the Periodic Table; and
(3) a saturated hydrocarbon containing halogen, which is introduced during polymerization.

2. The method for producing homo- and co-polymers of ethylene according to claim 1, wherein said phosphorus compound is a compound expressed by following general formulas:
PXₐR¹_{b}(OR²)_{c}, or POX_{d}R³ₑ(OR⁴)_{f},
where X is a halogen atom, and each of R¹, R², R³ and R⁴ is an alkyl, alkenyl or aryl group, having 1∼20 carbon atoms, each of which can be same or different from one another, with a+b+c=3, 0≤a≤3, 0≤b≤3, 0≤c≤3, d+e+f=3, 0≤d≤3, 0≤e≤3, and 0≤f≤3;
and said silane compound having alkoxy group is a compound of a general formula of RₙSi(OR)₄₋ₙ, where R is a hydrocarbon group having 1∼12 carbon atoms, and n is a natural number between 1 and 3.

3. The method for producing homo- and co-polymers of ethylene according to claim 2, wherein the said phosphorus compound is phosphorus trichloride, phosphorus tribromide, diethylchlorophosphite, diphenylchlorophosphite, diethylbromophosphite, diphenylbromophosphite, dimethylchlorophosphite, phenylchlorophosphite, trimethylphosphite, triethylphosphite, tri-n-butylphosphite, trioctylphosphite, tridecylphosphite, triphenylphosphite, triethylphosphate, tri-n-butylphosphate, or triphenylphophate; and silane compound having alkoxy group is dimethyldimethoxysilane, dimethyldiethoxysilane, diphenyldimethoxysilane, methylphenylmethoxysilane, diphenylethoxysilane, ethyltrimethoxysilane, vinyltrimethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, or methyltriaryloxylsilane.

4. The method for producing homo- and co-polymers of ethylene according to claim 1, wherein said titanium compound is represented by a general formula of Ti(OR)ₐX₄₋ₐ, where R is an alkyl group with 1∼10 carbon atoms, X is a halogen atom, and a is a natural number between 0 and 4, and said silicon compound is represented by a general formula of RₙSiCl₄₋ₙ, where R stands for hydrogen; or an alkyl, alkoxy, haloalkyl, or aryl group having 1∼10 carbons; or a halosilyl or halosilylalkyl group having 1∼8 carbons; and n is a natural number between 0 and 3.

5. The method for producing homo- and co-polymers of ethylene according to claim 4, wherein said titanium compound is a 4-halogenated titanium, which is selected from the group consisting of TiCl₄, TiBr₄, and TiI₄; a 3-halogenated alkoxytitanium, which is selected from the group consisting of Ti(OCH₃)Cl₃, Ti(OC₂H₅)Cl₃, Ti(OC₂H₅)Br₃, and Ti(O(i-C₄H₉))Br₃; a 2-halogenated alkoxytitanium, which is selected from the group consisting of Ti(OCH₃)₂Ch, Ti(OC₂H₅)₂Cl₂, Ti(O(i-C₄H₉))₂Cl₂, and Ti(OC₂H₅)₂Br₂; or a tetraalkoxytitanium, which is selected from the group consisting of Ti(OCH₃)₄, Ti(OC₂H₅)₄, and Ti(OC₄H₉)₄; or mixture of these; and said silicon compound is silicon tetrachloride; a trichlorosilane, which is selected from the group consisting of methyltrichlorosilane, ethyltrichlorosilane, and phenyltrichlorosilane; a dichlorosilane, which is selected from the group consisting of dimethyldichlorosilane, diethyldichlorosilane, diphenyldichlorosilane, and methylphenyldichlorosilane; or a monochlorosilane as in trimethylchlorosilane.

6. The method for producing homo- and co-polymers of ethylene according to claim 4, wherein said titanium compound is titanium tetrachloride, and said silicon compound is silicon tetrachloride.

7. The method for producing homo- and co-polymers of ethylene according to claim 1, wherein said organoaluminum compound is represented by a general formula of RₐAIX_{b} where R is a hydrogen or an alkyl, alkoxy, haloalkyl, or aryl group having 1∼10 carbons, and X is chlorine, bromine, iodine or fluorine, a and b are natural numbers with a + b=3, or RₐAl₂X_{b} where R is a hydrogen or an alkyl, alkoxy, haloalkyl, or aryl group having 1∼10 carbons, X is chlorine, bromine, iodine or fluorine, and a and b are natural numbers with a + b=6.

8. The method for producing homo- and co-polymers of ethylene according to claim 7, wherein said organoaluminum compound is triethylaluminum, triisobutylaluminum, trimethylaluminum, ethylaluminumdichloride, ethylaluminum sesquichloride, dimethylaluminumhydride, diethylaluminumchloride or dimethylaluminum chloride.

9. The method for producing homo- and co-polymers of ethylene according to claim 1, wherein said saturated hydrocarbon containing halogen is a compound or a mixture of compounds, which contains at least one halogen of chlorine, bromine, fluorine or iodine and has 1∼10 carbons, such as ethylchloride, chloroform, tertiarybutylchloride, tetrachloromethane, ethylbromide, teriarybutyliodide, n-butylbromide, n-butyliodide and n-butylfluoride.

## Patentansprüche

1. Verfahren zum Erzeugen von Homo- und Copolymeren von Ethylen, welches ausgeführt wird bei Vorhandensein von:
(1) einem durch folgende Schritte erzeugten Feststofftitankomplexkatalysator:
(a) Vorbereiten einer Magnesiumlösung durch Kontaktieren von halogenierten Magnesiumverbindungen mit Alkohol;
(b) zur Reaktion bringen der Magnesiumlösung mit Phosphorverbindungen und Silanverbindungen, welche eine Alkoxygruppe als Elektronenspender enthalten,
(c) Zusammensetzen eines Katalysator-Vorläufers durch Rekristallisierung in feste Stoffe durch Kontaktieren der in Schritt (b) erzeugten Lösung mit einer Lösung einer Mischung aus Titanverbindungen und Silikonverbindungen,
(d) Reigen des Katalysator-Vorläufers durch Hinzufügen von Organoaluminiumverbindungen und
(e) Erzeugen eines Feststofftitankomplexkatalysators durch zur Reaktion bringen mit Titanverbindungen; .
(2) metallorganischen Verbindungen in Gruppe II oder III des Periodensystems; und
(3) einem gesättigten, Halogen enthaltenden Kohlenwasserstoff, welcher während Polymerisation eingebracht wird.

2. Verfahren zum Erzeugen von Homo- und Copolymeren von Ethylen nach Anspruch 1, **dadurch gekennzeichnet, dass** die Phosphorverbindung eine durch folgende allgemeine Formeln wiedergegebene Verbindung ist:
PXₐR¹_{b}(OR²)_{c} oder POX_{d}R³ₑ(OR⁴)_{f},
wobei X ein Halogenatom ist und jedes von R¹, R², R³ und R⁴ eine Alkyl-, Alkenyl- oder Arylgruppe mit 1∼20 Kohlenstoffatomen ist, die jeweils gleich oder zueinander verschieden sein können, wobei a + b + c = 3, 0≤ a≤ 3, 0≤ b≤ 3, 0≤c≤3, d + e + f = 3, 0≤d≤3, 0≤e≤3, und 0≤f≤ 3;
und die Silanverbindung, welche eine Alkoxygruppe aufweist, eine Verbindung einer allgemeinen Formel von RₙSi(OR)₄₋ₙ ist, wobei R eine Kohlenwasserstoffgruppe mit 1 ∼ 12 Kohlenstoffatomen ist und n eine natürliche Zahl zwischen 1 und 3 ist.

3. Verfahren zum Erzeugen von Homo- und Copolymeren von Ethylen nach Anspruch 2, **dadurch gekennzeichnet, dass** die Phosphorverbindung Phosphortrichlorid, Phosphortribromid, Diethylchlorphosphit, Diphenylchlorphosphit, Diethylbromphosphit, Diphenylbromphosphit, Dimethylchlorphosphit, Phenylchlorphosphit, Trimethylphosphit, Triethylphosphit, Tri-n-butylphosphit, Trioctylphosphit, Tridecylphosphit, Triphenylphosphit, Triethylphosphat, Tri-n-butylphosphat oder Triphenylphosphat ist und die eine Alkoxygruppe aufweisende Silanverbindung Dimethyldimethoxysilan, Dimethyldiethoxysilan, Diphenyldimethoxysilan, Methylphenyldimethoxysilan, Diphenylethoxysilan, Ethyltrimethoxysilan, Vinyltrimethoxysilan, Methyltrimethoxysilan, Phenyltrimethoxysilan, Methyltriethoxysilan, Ethyltriethoxysilan, Vinyltriethoxysilan, Butyltriethoxysilan, Phenyltriethoxysilan, Ethyltriisopropoxysilan, Vinyltributoxysilan, Ethylsilicat, Butylsilicat oder Methyltriaryloxysilan ist.

4. Verfahren zum Erzeugen von Homo- und Copolymeren von Ethylen nach Anspruch 1, **dadurch gekennzeichnet, dass** die Titanverbindung durch eine allgemeine Formel Ti(OR)ₐX₄₋ₐ wiedergegeben wird, wobei R eine Alkylgruppe mit 1 ∼ 10 Kohlenstoffatomen ist, X ein Halogenatom ist und a eine natürliche Zahl zwischen 0 und 4 ist, und die Siliciumverbindung durch eine allgemeine Formel RₙSiCl₄₋ₙ wiedergegeben wird, wobei R für Wasserstoff oder eine Alkyl-, Alkoxy-, Haloalkyl- oder Arylgruppe mit 1 ∼ 10 Kohlenstoffatomen oder eine Halosilyl- oder Halosilylalkylgruppe mit 1 ∼ 8 Kohlenstoffen steht; und n eine natürliche Zahl zwischen 0 und 3 ist.

5. Verfahren zum Erzeugen von Homo- und Copolymeren von Ethylen nach Anspruch 4, **dadurch gekennzeichnet, dass** die Titanverbindung ein tetrahalogeniertes Titan, welches aus der Gruppe bestehend aus TiCl₄, TiBr₄ und Til₄ ausgewählt wird, ein trihalogeniertes Alkoxytitan, welches aus der Gruppe bestehend aus Ti(OCH₃)Cl₃, Ti(OC₂H₅)Cl₃, Ti(OC₂H₅)Br₃ und Ti(O(i-C₄H₉))Br₃ ausgewählt wird, ein dihalogeniertes Alkoxytitan, welches aus der Gruppe bestehend aus Ti(OCH₃)₂Cl₂, Ti(OC₂H₅)₂Cl₂, Ti(O(i-C₄H₉))₂Cl₂ und Ti(OC₂H₅)₂Br₂ ausgewählt wird, oder ein Tetraalkoxytitan, welches aus der Gruppe bestehend aus Ti(OCH₃)₄, Ti(OC₂H₅)₄ und Ti(OC₄H₉)₄ ausgewählt wird, oder ein Gemisch derselben ist und die Siliciumverbindung Siliciumtetrachlorid, ein Trichlorsilan, welches aus der Gruppe bestehend aus Methyltrichlorsilan, Ethyltrichlorsilan und Phenyltrichlorsilan ausgewählt wird, ein Dichlorsilan, welches aus einer Gruppe bestehend aus Dimethyldichlorsilan, Diethyldichlorsilan, Diphenyldichlorsilan und Methylphenyldichlorsilan ausgewählt wird, oder ein Monochlorsilan wie in Trimethylchlorsilan ist.

6. Verfahren zum Erzeugen von Homo- und Copolymeren von Ethylen nach Anspruch 4, **dadurch gekennzeichnet, dass** die Titanverbindung Titantetrachlorid ist und die Siliciumverbindung Siliciumtetrachlorid ist.

7. Verfahren zum Erzeugen von Homo- und Copolymeren von Ethylen nach Anspruch 1, **dadurch gekennzeichnet, dass** die Organoaluminiumverbindung durch eine allgemeine Formel RₐAlX_{b}, wobei R ein Wasserstoff oder eine Alkyl-, Alkoxy-, Haloalkyl- oder Arylgruppe mit 1 ∼ 10 Kohlenstoffen ist und X Chlor, Brom, lod oder Fluor ist, a und b natürliche Zahlen mit a + b = 3 sind, oder RₐAl₂X_{b}, wobei R ein Wasserstoff oder eine Alkyl-, Alkoxy-, Haloalkyl- oder Arylgruppe mit 1 ∼ 10 Kohlenstoffen ist, X Chlor, Brom, lod oder Fluor ist und a und b natürliche Zahlen mit a + b = 6 sind, wiedergegeben wird.

8. Verfahren zum Erzeugen von Homo- und Copolymeren von Ethylen nach Anspruch 7, **dadurch gekennzeichnet, dass** die Organoaluminiumverbindung Triethylaluminium, Triisobutylaluminium, Trimethylaluminium, Ethylaluminiumdichlorid, Ethylaluminiumsesquichlorid, Dimethylaluminiumhydrid, Diethylaluminiumchlorid oder Dimethylaluminiumchlorid ist.

9. Verfahren zum Erzeugen von Homo- und Copolymeren von Ethylen nach Anspruch 1, **dadurch gekennzeichnet, dass** der gesättigte, Halogen enthaltende Kohlenwasserstoff eine Verbindung oder ein Gemisch von Verbindungen ist, welches mindestens ein Halogen von Chlor, Brom, Fluor oder lod umfasst und 1 ∼ 10 Kohlenstoffatomen aufweist, wie zum Beispiel Ethylchlorid, Chloroform, Tertiärbutylchlorid, Tetrachlormethan, Ethylbromid, Tertiärbutyliodid, n-Butylbromid, n-Butyliodid und n-Butylfluorid.

## Revendications

1. Procédé de production de homopolymères et de copolymères d'éthylène, qui est exécuté en présence de:
(1) un catalyseur complexe solide en titane préparé par les étapes de
(a) préparer une solution de magnésium en mettant en contact des composés de magnésium halogénés avec de l'alcool,
(b) faire réagir ladite solution de magnésium avec des composés de phosphore et des composés de silane contenant des groupes alcoxy comme donneurs d'électrons,
(c) composer un précurseur de catalyseur par recristallisation en solides en mettant en contact la solution préparée à l'étape (b) avec la solution de mélange de composés de titane et de composés de silicium,
(d) faire vieillir le précurseur de catalyseur en ajoutant des composés d'organoaluminium, et
(e) préparer un catalyseur complexe solide en titane par une réaction avec des composés de titane;
(2) des composés organométalliques dans le Groupe II ou III de la Table Périodique; et
(3) un hydrocarbure saturé contenant l'halogène, qui est introduit durant la polymérisation.

2. Procédé de production de homopolymères et de copolymères d'éthylène selon la revendication 1, où ledit composé de phosphore est un composé exprimé par les formules générales suivantes:
PXₐR¹_{b}(OR²)_{c}, ou POX_{d}R³ₑ(OR⁴)_{f},
où X est un atome d'halogène, et chacun de R¹,R²,R³ et R⁴ est un groupe alkyle, alkényle ou aryle, ayant 1 ∼ 20 atomes de carbone, dont chacun peut être le même ou différent d'un autre, avec a + b + c = 3,0 ≤a≤3, 0≤b≤3, 0≤c≤3, d+e+f=3, 0≤d≤3, 0≤e≤3 et 0≤f≤3;
et ledit composé de silane ayant un groupe alcoxy est un composé de la formule générale de RₙSi(OR)₄₋ₙ, où R est un groupe d'hydrocarbures ayant 1∼12 atomes de carbone, et n est un entier naturel entre 1 et 3.

3. Procédé de production de homopolymères et copolymères d'éthylène selon la revendication 2, où ledit composé de phosphore est un trichlorure de phosphore, tribromure de phosphore, diéthylchlorophosphite, diphénylchlorophosphite, diéthylbromophosphite, diphénylbromophosphite, diméthylchlorophosphite, phénylchlorophoshite, triméthylphosphite, triéthylphosphite, tri-n-butylphosphite, trioctylphosphite, tridécylphosphite, triphénylphosphite, triéthylphosphite, tri-n-butylphosphate, ou triphénylphosphate, et un composé de silane ayant un groupe alcoxy est diméthyldiméthoxysilane, diméthyldiéthoxysilane, diphényldiméthoxysilane, méthylphénylméthoxysilane, diphényléthoxysilane, éthyltriméthoxysilane, vinyltriméthoxysilane, méthyltriméthoxysilane, phényltriméthoxysilane, méthyltriéthoxysilane, éthyltriéthoxysilane, vinyltriéthoxysilane, butyltriéthoxysilane, phényltriéthoxysilane, éthyltriisopropoxysilane, vinyltributoxysilane, éthylsilicate, butylsilicate ou méthyltriaryloxylsilane.

4. Procédé de production de homopolymères et copolymères d'éthylène selon la revendication 1, où ledit composé de titane est représenté par la formule générale de Ti(OR)ₐX₄₋ₐ, où R est un groupe alkyle avec 1∼10 atomes de carbone, X est un atome d'halogène, et a est un entier naturel entre 0 et 4, et ledit composé de silicium est représenté par une formule générale de RₙSiCl₄₋ₙ, où R représente hydrogène; ou un groupe alkyle, alcoxy, haloalkyle, ou aryle ayant 1∼10 atomes de carbone; ou un groupe halosilyle ou halosilylalkyle ayant 1∼8 atomes de carbone; et n est un entier naturel entre 0 et 3.

5. Procédé de production de homopolymères et copolymères d'éthylène selon la revendication 4, où ledit composé de titane est un titane 4-halogéné, qui est sélectionné dans le groupe consistant en TiCl₄, TiBr₄ et TiI₄; un alcoxytitane 3-halogéné, qui est sélectionné dans le groupe consistant en Ti(OCH₃)Cl₃, Ti(OC₂H₅)Cl₃, Ti(OC₂H₅)Br₃ et Ti(O(i-C₄H₉))Br₃; un alcoxytitane 2-halogéné, qui est sélectionné dans le groupe consistant en Ti(OCH₃)₂Cl₂, Ti(OC₂H₅)₂Cl₂, Ti(O(i-C₄H₉))₂Cl₂ et Ti(OC₂H₅)₂Br₂; ou un tétraalcoxytitane, qui est sélectionné dans le groupe consistant en Ti(OCH₃)₄, Ti(OC₂H₅)₄ et Ti(OC₄H₉)₄; ou un mélange de ceux-ci; et ledit composé de silicium est du tétrachlorure de silicium; un trichlorosilane, qui est sélectionné dans le groupe consistant en méthyltrichlorosilane, éthyltrichlorosilane et phényltrichlorosilane, un dichlorosilane, qui est sélectionné dans le groupe consistant en diméthyldichlorosilane, diéthyldichlorosilane, diphényldichlorosilane et méthylphényldichlorosilane; ou un monochlorosilane comme dans triméthylchlorosilane.

6. Procédé de production de homopolymères et de copolymères d'éthylène selon la revendication 4, où ledit composé de titane est du tétrachlorure de titane, et ledit composé de silicium est du tétrachlorure de silicium.

7. Procédé de production de homopolymères et copolymères d'éthylène selon la revendication 1, où ledit composé organoaluminium est représenté par une formule générale de RₐAlX_{b} où R est un hydrogène ou un groupe alkyle, alcoxy, haloalkyle ou aryle ayant 1∼10 atomes de carbone, et X est chlore, brome, iode ou fluor, a et b sont des entiers naturels avec a + b =3, ou RₐAl₂X_{b} où R est hydrogène ou un groupe alkyle, alcoxy, haloalkyle, ou aryle ayant 1∼10 atomes de carbone, X est chlore, brome, iode ou fluor, et a et b sont des entiers naturels avec a+b=6.

8. Procédé de production de homopolymères et copolymères d'éthylène selon la revendication 7, où ledit composé d'organoaluminium est triéthylaluminium, triisobutylaluminium, triméthylaluminium, éthylaluminiumdichlorure, éthylaluminium, sequichlorure, diméthylaluminiumhydrure, diéthylaluminiumchlorure ou diméthylaluminium chlorure.

9. Procédé de production de homopolymères et copolymères d'éthylène selon la revendication 1, où ledit hydrocarbure saturé contenant l'halogène est un composé ou un mélange de composés, qui contient au moins un halogène de chlore, brome, fluor ou iode et présente 1∼10 atomes de carbone, comme éthylchlorure, chloroforme, butylchlorure tertiaire, tétrachlorométhane, éthylbromure, butyliodure tertiaire, n-butylbromure, n-butyliodure et n-butylfluorure.
